## Europäisches Patentamt
## European Patent Office
## Office européen des brevets

(11) Veröffentlichungsnummer: **0 061 215**
**B1**

(12) # EUROPÄISCHE PATENTSCHRIFT

(45) Veröffentlichungstag der Patentschrift:
**23.10.85**

(51) Int. Cl.⁴: **G 11 B  17/02,** G 11 B  21/12,
**G 11 B  5/54**

(21) Anmeldenummer: **82200264.8**

(22) Anmeldetag: **03.03.82**

(54) **Betätigungsvorrichtung für die Magnetkopfanordnung eines Disketten-Laufwerkes.**

(30) Priorität: **14.03.81  DE 3109932**

(43) Veröffentlichungstag der Anmeldung:
**29.09.82 Patentblatt 82/39**

(45) Bekanntmachung des Hinweises auf die Patenterteilung:
**23.10.85 Patentblatt 85/43**

(84) Benannte Vertragsstaaten:
**DE FR GB IT**

(56) Entgegenhaltungen:
**EP - A - 0 039 975
DE - A - 1 949 325
DE - B - 2 812 604
US - A - 3 678 481
US - A - 3 899 794**

(73) Patentinhaber: **Philips Patentverwaltung GmbH,
Billstrasse 80, D-2000 Hamburg 28 (DE)**

(84) Benannte Vertragsstaaten: **DE**

(73) Patentinhaber: **N.V. Philips' Gloeilampenfabrieken,
Groenewoudseweg 1, NL-5621 BA Eindhoven (NL)**

(84) Benannte Vertragsstaaten: **FR GB IT**

(72) Erfinder: **Becker, Gerhard, Arbachstrasse 7,
D-5908 Neunkirchen (DE)**

(74) Vertreter: **Hartmann, Heinrich, Dipl.-Ing. et al, Philips
Patentverwaltung GmbH
Billstrasse 80 Postfach 10 51 49,
D-2000 Hamburg 28 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Betätigungsvorrichtung zum Heben und Senken des die Magnetkopfanordnung tragenden Landehebels des Laufwerkes eines Magnetplattenspeichers, dessen vordere Öffnung zum Einführen einer flexiblen Diskette mit einer schwenkbaren Frontklappe verschließbar ist.

Aus der US-PS 3 678 481 ist ein Laufwerk für eine Diskette bekannt, in das nach Öffnen eines über das gesamte Laufwerk sich erstreckenden Deckels die Diskette eingelegt wird. Durch Schließen des Deckels wird die Diskette zwischen einen Spannkonus und einen Plattenteller zentrisch eingespannt und in Rotation versetzt. Die Schutzhülle der Diskette wird dabei nicht bewegt. Sie besitzt einen radialen Ausschnitt, durch den die Schreib- und Lesekopfanordnung auf die flexible Magnetplatte abgesenkt werden kann. Hierzu ist ein Elektromagnet vorgesehen, dessen Anker bis zum Landehebel reicht, auf dem der Magnetkopf angeordnet ist. Wird der Elektromagnet erregt, so gibt dessen Anker den Landehebel frei, der dann durch Federkraft die Magnetkopfanordnung gegen die Magnetplatte anlegt. Auf dem Anker ist weiterhin eine einstellbare Federplatte befestigt, die ein Reibkissen trägt. Gleichzeitig mit der Auflage des Magnetkopfes auf die Magnetplatte wird auch dieses Druckkissen gegen die Schutzhülle der Diskette gedrückt. Dadurch wird ein ruhiger Lauf der Magnetplatte erreicht. Der Elektromagnet ist programmgesteuert und kann unabhängig von der Stellung des Deckels erregt werden. Es besteht daher die Gefahr, daß die Diskette dem Laufwerk entnommen werden kann, ohne daß die Magnetkopfanordnung von ihr abgehoben ist. Eine Beschädigung der Diskette und des Magnetkopfes ist daher nicht ausgeschlossen. Außerdem ist die bekannte Anordnung aufwendig und bedingt eine besondere Steuerschaltung für den Magneten.

Weiterhin ist aus der älteren europäischen Patentanmeldung 81 200 487.7, die als EP-A2-0 039 975 veröffentlicht ist und nach Art. 54 (3) EPÜ als Stand der Technik gilt, bekannt, den die Magnetkopfanordnung tragenden Landehebel mit einer Traverse zu versehen, auf die ein beidseitig abgeschrägter Auflaufhebel einwirkt. Durch Verschieben dieses Auflaufhebels durch die Diskette wird die Magnetkopfanordnung gehoben oder gesenkt. Dazu wird der Auflaufhebel durch die Diskette entgegen einer Feder verschoben, so daß automatisch die Magnetkopfanordnung angehoben und anschließend wieder gesenkt wird, wenn die Diskette in das Laufwerk eingeschoben oder diesem entnommen wird. Nachteilig hierbei ist, daß die den Auflaufhebel tragenden Auswurfeinrichtung beim Einführen der Diskette durch diese verschoben werden muß. Dabei müssen die Reibungskräfte zwischen abgeschrägtem Hebelarm und Traverse voll von der Diskette aufgenommen werden. Eine Beschädigung der Diskette ist dadurch nicht ausgeschlossen.

Der Erfindung liegt die Aufgabe zugrunde, eine Betätigungsvorrichtung zum Heben und Senken der Magnetkopfanordnung eines Laufwerkes für flexible Magnetplattenspeicher zu schaffen, durch die einerseits eine zwangsweise von der Bewegung der Frontklappe abhängige Verschiebung der Magnetkopfanordnung erreicht wird und andererseits eine übermäßige Beanspruchung der Diskette bei Einführen in das Laufwerk vermieden wird. Außerdem soll die relativ kleine Bauhöhe des Laufwerkes dadurch nicht beeinträchtigt werden.

Eine Betätigungsvorrichtung zur Lösung der gestellten Aufgabe besteht aus einer parallel zum Landehebel sich erstreckenden Stützplatte, auf der sich der Landehebel über eine seitlich ausladende Traverse abstützt und einem Umlenkhebel, der durch ein bis zu einer die Öffnung zum Einführen einer Diskette abschließenden Frontplatte reichendes und von dieser bewegtes Gestänge betätigt, die Stützplatte beim Schließen der Klappe senkrecht zur Diskette in eine Lage verschiebt, in der die Stützplatte zur Diskette hin abgesenkt ist.

Der Umlenkhebel kann die Stützplatte entgegen der Kraft einer Feder verschieben, die die Stützplatte und damit den Landehebel bei geöffneter Klappe in der von der Diskette abgehobenen Stellung hält.

Gemäß weiterer Ausbildung der Erfindung ist an der zur Diskette weisenden Seite der Stützplatte ein Druckkissen zur Auflage auf der Diskette angeordnet. Der Umlenkhebel liegt bei abgesenkter Stützplatte gegen einen ortsfesten Anschlag an und begrenzt dadurch die Verschiebung der Stützplatte derart, daß das Druckkissen nur leicht auf der Diskette aufliegt, während die Magnetkopfanordnung, von der Stützplatte befreit, auf der flexiblen Magnetplatte federschlüssig aufliegt.

Zweckmäßig ist die Länge der Stützplatte so gewählt, daß sie größer ist als die mögliche Wegstrecke, die die Magnetkopfanordnung während des Betriebes über die Diskette 8 innerhalb des radialen Ausschnittes zurücklegt. Dadurch liegt die Traverse des Landehebels stets über der Stützplatte, so daß die Magnetkopfanordnung in jeder Lage abgehoben werden kann, die sie gerade über der Diskette eingenommen hat, wenn die Frontklappe geöffnet wird.

Die Erfindung wird anhand eines Ausführungsbeispieles näher beschrieben. Es zeigt

Fig. 1 die Schnittdarstellung der Betätigungsvorrichtung in Ruhestellung bei geöffneter Frontklappe,

Fig. 2 die Schnittdarstellung der Betätigungsvorrichtung in Arbeitsstellung bei geschlossener Frontklappe und eingeführter Diskette und

Fig. 3 die Draufsicht eines Teiles der Betätigungsvorrichtung im Bereich der Magnetkopfanordnung.

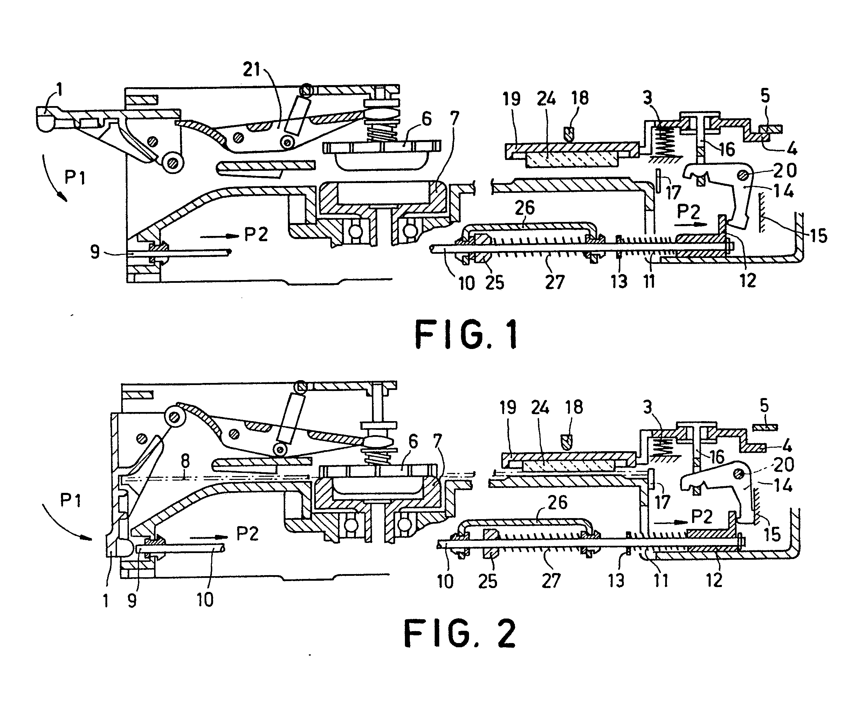

Der Zusammenbau des in den Fig. 1 und 2 dargestellten Laufwerkes für Disketten ist an sich allgemein bekannt. Um die Wirkungsweise der Erfindung besser zu erläutern, sind nur die unmittelbar beteiligten Bauelemente des Laufwerkes dargestellt und beschrieben.

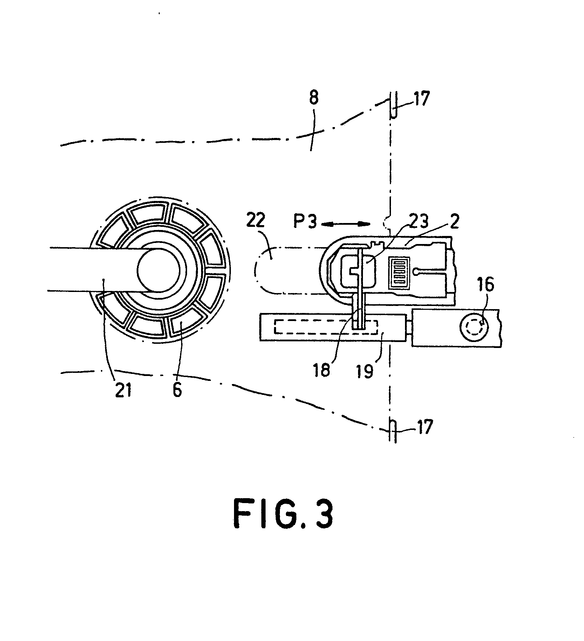

Die Fig. 1 zeigt das Laufwerk im Ruhezustand. Eine Diskette ist nicht eingelegt. Die Frontklappe 1 ist in geöffneter Stellung. Wie aus Fig. 3 ersichtlich, ist parallel zum Landehebel 2, der den Magnetkopf 23 trägt, eine Stützplatte 19 angeordnet, die senkrecht zur Diskette 8 verschoben werden kann. Die Führung für eine solche Verschiebung der Stützplatte 19 ist an sich bekannt und daher in den Figuren nicht näher dargestellt. Die Verschiebung der Stützplatte 19 erfolgt gegen die Kraft der Hochhaltefeder 3, die auf einer ortsfesten Auflage des Laufwerkes aufliegt. In dieser durch die Hochhaltefeder 3 bestimmten oberen Lage liegt die Stützplatte 19 mit ihrer Anschlagnase 4 gegen den ortsfesten Anschlag 5 des Laufwerkes an. Da die Frontklappe 1 geöffnet ist, ist der Spannkonus 6 von dem Antriebsteller 7 abgehoben, so daß eine Diskette 8 eingeführt werden kann. Die Diskette 8 wird so weit eingeführt, bis sie gegen die Anschläge 17 anliegt.

Wird die Frontklappe 1 nach Einführung der Diskette 8 in Schließrichtung P1 bewegt, so wird zunächst in an sich bekannter Weise der Spannkonus 6 über den Absenkhebel 21 und mit ihm die eingelegte Diskette 8 auf dem Antriebsteller 7 zentriert und angepreßt. Im weiteren Verlauf der Schließbewegung trifft die Frontklappe 1 schließlich auf das vordere Ende 9 des Gestänges 10 und bewegt dieses solange in Pfeilrichtung P2, bis die Frontklappe 1 die eingerastete Schließstellung erreicht hat. Diese Schließstellung ist in Fig. 2 dargestellt.

Das Gestänge 10 ist an seinem vorderen Ende 9 gelagert und ebenso im Inneren des Laufwerkes in der Lagerbrücke 26. Diese Lagerbrücke 26 ist ortsfest. Auf ihr stützt sich eine Rückholfeder 27 ab, die mit ihrem anderen Ende gegen einen Schaltring 25 anliegt, der auf dem Gestänge 10 fest angeordnet ist. Dieser Schaltring kann dazu verwendet werden, einen Mikroschalter zu betätigen, über den die Schließstellung der Frontklappe 1 signalisiert werden kann. Am hinteren Ende des Gestänges 10 ist ein Schieber zusammen mit einer Feder 11 aufgesteckt, die sich auf dem mit dem Gestänge verbundenen Ring 13 abstützt. Der Schieber 12 wirkt auf einen Umlenkhebel 14 ein, der auf der Achse 20 drehbar gelagert ist. Die andere Seite des Umlenkhebels 14 ist mit Zuglasche 16 der Stützplatte 19 verbunden. Wird durch Schließen der Frontklappe 1 das Gestänge 10 in Pfeilrichtung P2 bewegt, so wird durch den Schieber 12 der Umlenkhebel 14 gegen die Anlage 15 gedrückt. Bei dieser Schwenkbewegung des Umlenkhebels 14 wird über die Lasche 16 die Stützplatte 19 entgegen der Hochhaltefeder 3 in Richtung auf die Diskette 8 bewegt. Auf der der Diskette 8 zugewandten Seite der Stützplatte 19 ist ein Druckkissen 24 befestigt, das beispielsweise aus Schaumgummi besteht. Der Anschlag 15 begrenzt die Schwenkbewegung des Umlenkhebels 14 derart, daß das Druckkissen 24 nur leicht auf der Schutzhülle der Diskette 8 aufliegt und dadurch ein Flattern der flexiblen Magnetplatte verhindert.

Wie aus Fig. 3 ersichtlich, liegt die Stützplatte 19 parallel zum Landehebel 2, der den Magnetkopf 23 trägt. Landehebel und Magnetkopf werden während des Betriebes in Pfeilrichtung P3 bewegt. Dabei greift der Magnetkopf 23 durch den Ausschnitt 22 der Diskette 8 hindurch und liegt auf der flexiblen Magnetplatte auf. Die Länge der Stützplatte 19 ist so gewählt, daß sie etwas größer ist als die mögliche Pfeilrichtung P3 zurückgelegte Wegstrecke des Landehebels 2 ist. Der Landehebel 2 besitzt seitlich eine Traverse 18, die bis über die Stützplatte 19 ragt. Wird durch den Umlenkhebel 14 die Stützplatte 19 in Richtung auf die Diskette 8 abgesenkt, so folgt dieser Bewegung der federschlüssig gelagerte Landehebel 2 bis zur Auflage des Magnetkopfes 23 auf der Magnetplatte.

Die Rückstellung der Betätigungsvorrichtung erfolgt durch Öffnen der Frontklappe 1. Dadurch wird ein Abheben der Stützplatte 19 und damit des Landehebels 2 bewirkt, indem der vorher beschriebenen Ablauf umgekehrt erfolgt. Durch Öffnen der Frontklappe 1 wird das Gestänge 10 durch die Rückstellfeder 27 entgegen der Pfeilrichtung P2 bewegt. Der Schieber 12 gibt den Umlenkhebel 14 frei und damit auch die Stützplatte 19, die nunmehr der Kraft der Hochhaltefeder 3 folgen kann. Durch die Zuglasche 16 wird der Umlenkhebel 14 mit verschwenkt. Gleichzeitig mit der Stützplatte 19 wird über die Traverse 18 auch der Landehebel 2 von der Diskette 8 abgehoben.

Damit ist erreicht, daß der Landehebel und damit die Magnetkopfanordnung nur dann auf der Diskette aufliegen kann, wenn die Frontklappe 1 geschlossen ist. Eine Zerstörung des empfindlichen Magnetkopfes durch unbeabsichtigtes Herausziehen oder Einführen der Diskette ist damit ausgeschlossen, zumal das Gestänge 10 nur dann bewegt wird, wenn die Frontplatte fast geschlossen ist. Ein Eingreifen in das Innere des Laufwerkes ist dadurch nicht möglich.

**Patentansprüche**

1. Betätigungsvorrichtung zum Heben und Senken eines eine Magnetkopfanordnung tragenden Landehebels eines Magnetplattenspeichers, bestehend aus einer parallel zum Landehebel sich erstreckenden Stützplatte, auf der sich der Landehebel über eine seitlich ausladende Traverse abstützt und einem Umlenkhebel, der durch ein bis zu einer die Öffnung zum Einführen einer Diskette abschließenden Frontklappe reichendes und von dieser bewegtes Gestänge betätigt, die Stützplatte beim Schließen der Klappe senkrecht zur Diskette in eine Lage verschiebt, in der die Stützplatte zur Diskette hin abgesenkt ist.

2. Betätigungsvorrichtung nach Anspruch 1, dadurch gekennzeichnet, daß der Umlenkhebel die Stützplatte entgegen der Kraft einer Feder verschiebt.

3. Betätigungsvorrichtung nach den Ansprüchen 1 und 2, dadurch gekennzeichnet, daß an der zur Diskette weisenden Seite der Stützplatte ein Druckkissen zur Auflage auf der Diskette angeordnet ist.

4. Betätigungsvorrichtung nach den Ansprüchen 1 bis 3, dadurch gekennzeichnet, daß der Umlenkhebel bei abgesenkter Stützplatte gegen einen ortsfesten Anschlag anliegt und die Verschiebung der Stützplatte derart begrenzt, daß das Druckkissen nur leicht auf der Hülle der Diskette und die Magnetkopfanordnung, von der Stützplatte befreit, durch Eigenfederung auf der eigentlichen Diskette aufliegt.

5. Betätigungsvorrichtung nach den Ansprüchen 1 bis 4, dadurch gekennzeichnet, daß die Länge der Stützplatte größer ist als die mögliche Wegstrecke, die die Magnetkopfanordnung über die Diskette während des Betriebes zurücklegt.

## Claims

1. An actuating device for lifting and lowering the landing lever of a magnetic-disk storage apparatus, which lever carries a magnetic-head assembly, which device comprises a supporting plate which extends parallel to the landing lever and which supports the landing lever via a laterally projecting cross-arm, and a guide lever, which actuates a rod, which rod extends up to a front cover by means of which a front opening for the insertion of a diskette can be closed, and which rod is moved by said cover, and which guide lever during closure of the front cover moves the supporting plate perpendicularly to the diskette into a position in which the supporting plate is lowered towards the diskette.

2. An actuating device as claimed in Claim 1, characterized in that the guide lever moves the supporting plate against the force of a spring.

3. An actuating device as claimed in Claims 1 and 2, characterized in that a pressure pad is arranged on that side of the supporting plate which faces the diskette for co-operation with the diskette.

4. An actuating device as claimed in Claims 1 to 3, characterized in that when the supporting plate is in the lowered position, the guide lever is positioned against a stationary stop and limits the movement of the supporting plate in such a way that the pressure pad exerts only a light pressure on the cartridge of the diskette and the magnetic headassembly, released by the supporting plate, is positioned on the actual diskette by its own resilience.

5. An actuating device as claimed in Claims 1 to 4, characterized in that the length of the supporting plate is greater than the possible travel of the magnetic-head assembly over the diskette during operation.

## Revendications

1. Dispositif d'actionnement pour la remontée et l'abaissement d'un levier d'accès de mémoire magnétique en forme de disque supportant une tête magnétique, dispositif qui est constitué, d'une part, d'une plaque d'appui qui s'étend parallèlement au levier d'accès et sur laquelle le levier d'accès prend appui par une traverse faisant saillie latéralement et, d'autre part, d'un levier de renvoi qui, commandé par un système de tiges s'étendant jusqu'à une plaque frontale de fermeture de l'ouverture d'introduction de la disquette et actionné par cette plaque frontale, déplace la plaque d'appui perpendiculairement à la disquette lors de la fermeture du couvercle de façon à amener cette plaque d'appui dans une position dans laquelle elle est rapprochée de la disquette.

2. Dispositif d'actionnement selon la revendication 1, caractérisé en ce que le levier de renvoi déplace la plaque d'appui à l'encontre de la force d'un ressort.

3. Dispositif d'actionnement selon les revendications 1 et 2, caractérisé en ce que sur la face de plaque d'appui située du côté de la disquette, est disposé un coussinet de pression servant à coopérer avec la disquette.

4. Dispositif d'actionnement selon les revendications 1 à 3, caractérisé en ce que, la plaque d'appui étant abaissée, le levier de renvoi est appuyé contre une butée stationnaire et limite le déplacement de la plaque d'appui de façon que le coussinet de pression ne soit appuyé que légèrement sur l'enveloppe de la disquette et que la tête magnétique, dégagée de la plaque d'appui, coopère par sa propre élasticité avec la disquette elle-même.

5. Dispositif d'actionnement selon les revendications 1 à 4, caractérisé en ce que la longueur de la plaque d'appui est supérieure à la distance possible parcourue, en fonctionnement, par la tête magnétique sur la disquette.

**FIG. 1**

**FIG. 2**

FIG. 3